# EUROPÄISCHE PATENTSCHRIFT

(11) **EP 0 736 150 B1**
(45) Veröffentlichungstag und Bekanntmachung des Hinweises auf die Patenterteilung: **09.07.1997**
(21) Anmeldenummer: 95904383.7
(22) Anmeldetag: 22.12.1994
(51) Int. Cl.: F16G 15/00

(54) **VERKÜRZUNGSKLAUE**
SHORTENING CLAW
GRIFFE DE RACCOURCISSEMENT

(30) Priorität: 23.12.1993 DE 4344935
(43) Veröffentlichungstag der Anmeldung: 09.10.1996
(73) Patentinhaber: RUD-KETTENFABRIK RIEGER & DIETZ GMBH U. CO., 73432 Aalen (DE)
(72) Erfinder: SMETZ, Reinhard, D-86720 Baldingen (DE)
(74) Vertreter: Böning, Manfred, Dr.-Ing.
(86) Internationale Anmeldenummer: DE9401539
(87) Internationale Veröffentlichungsnummer: WO9517620

(56) Entgegenhaltungen:
- EP-A- 0 092 135
- EP-A- 0 125 571
- DE-A- 4 115 341
- DE-C- 2 712 605
- DE-U- 6 903 899
- DE-U- 9 320 125
- FR-A- 1 270 232
- GB-A- 2 088 520
- GB-A- 2 127 129
- US-A- 3 729 926

## Beschreibung

Die Erfindung betrifft eine doppelzinkige Verkürzungsklaue mit zwei über einen Rücken miteinander in Verbindung stehenden, im wesentlichen parallel zueinander angeordneten Haken, die im Bereich ihrer einen Einführschlitz für ein Glied eines Kettenstranges begrenzenden Zinken eine Tasche zur Aufnahme und Abstützung eines auf das in den Einführschlitz eingeführte Kettenglied folgenden Kettengliedes bilden, das im wesentlichen senkrecht zur Ebene des Einführschlitzes angeordnet und durch ein einen Anschlag für den Bug des in den Einführschlitz eingeführten Kettengliedes bildendes Sicherungselement gegen unerwünschtes Aushängen aus der Tasche gesichert ist.

Verkürzungsklauen der vorstehenden Art sind außerordentlich robust und lassen nicht nur ein schnelles sondern auch ein sicheres Verkürzen von zum Heben schwerer Lasten verwendeten Kettensträngen zu, wobei die Sicherheit maßgebend von der als Tasche ausgebildeten Aufnahme für das jeweils in sie eingehängte Kettenglied des verkürzten Kettenstrangabschnittes bestimmt wird. Aus der DE 27 12 605 C 2 ist eine Verkürzungsklaue der in Betracht gezogenen Gattung bekannt, die an ihrem der Tasche abgewandten Ende einen Gabelkopf aufweist, der aus zwei parallelen Schenkeln mit fluchtenden Querbohrungen zur Aufnahme eines Haltebolzens für das Endglied eines Kettenstrangabschnittes besteht. Der Umstand, daß die bekannte Verkürzungsklaue nur an das Endglied eines Kettenstranges anschließbar ist, beschränkt oder erschwert zumindest insofern deren Einsatzmöglichkeiten, als man in der Praxis zumindest bei Kettengehängen regelmäßig gezwungen ist, den zu verkürzenden Kettenstrang durch ein zusätzliches Kupplungselement mit dem Endglied des Kettenstrangabschnittes zu verbinden, an dem die Verkürzungsklaue befestigt ist, wobei das Endglied zur Vermeidung von Nachteilen, die aus seiner Verbindung sowohl mit der Verkürzungsklaue als auch mit dem Kupplungselement resultieren, als Sonderglied mit gegenüber den übrigen Kettengliedern vergrößerter innerer Breite auszubilden ist.

Aus der DE-U-69 03 899 ist außerdem eine Verkürzungslasche mit einem im wesentlichen L-förmigen Grundkörper bekannt, dessen längerer Schenkel mit einer Bohrung zum unverlierbaren Anschluß eines Kettengliedes und mit einer Durchziehöffnung für einen zu verkürzenden Kettenstrang versehen ist und dessen kürzerer Schenkel demgegenüber einen in die Durchziehöffnung mündenden Schlitz aufweist, dessen Seitenwände zur Abstützung des Buges eines Kettengliedes des zu verkürzenden Kettenstranges dienen. Dabei sind das Ende des verkürzbaren Kettenstranges und das in die Bohrung der Verkürzungslasche eingehängte Kettenglied mit einem Sonderglied verbunden, dessen Abmessungen von den Abmessungen der Glieder des Kettenstranges abweichen. Die bekannte Verkürzungslasche eignet sich aufgrund der beschriebenen Anordnung nicht zum Verbinden sogenannter loser Kettenstrangenden, die bei Verwendung eines Gabelkopfanschlusses der in der DE-C-27 12 605 offenbarten Art grundsätzlich möglich ist.

Bekannt ist schließlich eine Verkürzungsklaue, die sich sowohl zum Verkürzen durchgehender Kettenstränge als auch zum schnellen vorübergehenden Verbinden der Enden zweier Kettenstrangabschnitte eignet. Bei dieser aus der US-A-3 729 926 bekannten Konstruktion ist oberhalb einer von parallel zueinander angeordneten Haken gebildeten ersten Aufnahme für ein Kettenglied im geraden Klauenrücken eine kreisförmige Durchziehöffnung angeordnet, an die sich ein Schlitz anschließt, dessen der Durchziehöffnung abgewandtes Ende von einem Querjoch gebildet wird, gegen das sich der Längsschenkel eines Gliedes eines durch die Durchziehöffnung geführten Kettenstranges abstützt, wobei weder die Art der Abstützung des Kettengliedes noch die Art der Kettenstrangführung eines zu verkürzenden durchgehenden Kettenstranges zu befriedigen vermögen.

Der Erfindung liegt die Aufgabe zugrunde, eine Verkürzungsklaue der in Betracht gezogenen Art so auszugestalten, daß sie unter Verzicht auf zusätzliche Kupplungselemente für den zu verkürzenden Kettenstrang an einer frei wählbaren Stelle eines Kettenstranges, und zwar auch eines durchgehenden Kettenstranges installiert werden kann. Gelöst wird diese Aufgabe bei einer gattungsgemäßen Verkürzungsklaue erfindungsgemäß dadurch, daß oberhalb der Tasche im Klauenrücken eine Durchziehöffnung für den das in die Tasche eingehängte Kettenglied aufweisenden Kettenstrang oder einen mit diesem Kettenstrang verbindbaren weiteren Kettenstrang angeordnet ist und daß in die Durchziehöffnung ein Schlitz mündet, der eine mit der Mittenebene des Einführschlitzes gemeinsame Mittenebene aufweist und bis in ein der Tasche abgewandtes, abgewinkeltes Ende des Klauenrückens reicht, wobei die am der Durchziehöffnung abgewandten Schlitzende durch ein Querjoch miteinander verbundenen Seitenwände dieses Schlitzes zur Abstützung eines Kettengliedes des das in die Tasche eingehängte Kettenglied aufweisenden Kettenstranges oder des mit diesem Kettenstrang verbindbaren weiteren Kettenstranges nutzbar sind.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform. Es zeigen:

Fig. 1 teilweise im Schnitt die Vorderansicht einer in einen durchgehenden Kettenstrang eingehängten Verkürzungsklaue im unbelasteten Zustand,

Fig. 2 einen Schnitt längs der Linie II-II in Fig. 1,

Fig. 3 einen der Fig. 2 entsprechenden Schnitt durch die zur Bildung einer Kranzkette genutzte Verkürzungsklaue gemäß Fig. 1 und 2,

Fig. 4 teilweise im Schnitt die Vorderansicht der zum Verbinden zweier Kettenstränge genutzten Verkürzungsklaue gemäß Fig. 1 und 2 und

Fig. 5 einen Schnitt längs der Linie V-V in Fig. 4.

In den Figuren sind 1 und 2 die Zinken zweier über einen Rücken 3 der Klaue miteinander verbundener Haken, die zusammen mit die Tragkraft der Zinken 1,2 erhöhenden, die Zinken 1,2 mit dem Klauenrücken 3 verbindenden Wänden 4 und 5 eine seitlich geschlossene Tasche 6 bilden.

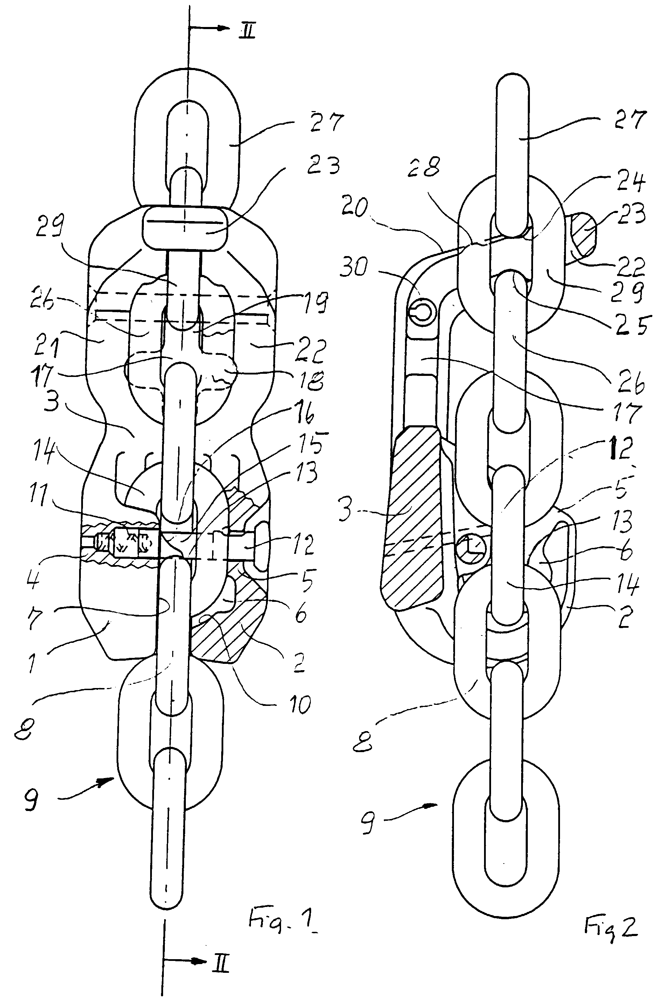

Die Tasche 6 weist einen nach vorn und unten offenen Einführschlitz 7 für ein Kettenglied 8 eines durchgehenden Kettenstranges 9 auf. Der Boden 10 der Tasche 6 ist an die Form der Buge der Kettenglieder des Kettenstranges 9 angepaßt, um gute Abstützverhältnisse zu gewährleisten. Ein gegen die Wirkung einer Feder 11 verschiebbarer Verriegelungsbolzen 12 bildet einen Anschlag für den Bug 13 des Kettengliedes 8 und verhindert ein ungewolltes Aushängen des Kettengliedes 14 aus der Tasche 6. Eine Quernut 15 des Verriegelungsbolzens 12 gibt das Kettenglied 8 frei, sobald der Verriegelungsbolzen 12 aus der in Fig. 1 dargestellten Position gegen die Wirkung der Feder 11 nach links verschoben ist. Während zum Entriegeln des Verriegelungsbolzens 12 dessen gesonderte Betätigung durch den Benutzer der Verkürzungsklaue erforderlich ist, erfolgt dessen Verlagerung beim Einhängen des Kettengliedes 14 in die Tasche 6 automatisch dadurch, daß der untere Bug des Kettengliedes 8 gegen eine Betätigungsrampe 16 gedrückt wird, die von einer Schrägfläche der Quernut 15 gebildet wird.

Oberhalb der Tasche 6 ist im Klauenrücken 3 eine Durchziehöffnung 17 für den Kettenstrang 9 angeordnet, die aus zwei sich kreuzenden Schlitzen 18 und 19 besteht. Der Schlitz 19 ist bis in ein unter einem Winkel von 90 - 120° abgewinkeltes Ende 20 des Klauenrückens 3 verlängert. Seine stegförmigen Seitenwände 21 und 22 sind am der Durchziehöffnung 17 abgewandten Ende durch ein Querjoch 23 miteinander verbunden. Rastmulden 24 und 25 für die Kettenglieder 26 und 27 sowie ein Rasthöcker 28 erschweren eine ungewollte Verlagerung des Kettengliedes 29 im Schlitz 19, während ein Sperrstift 30 das Zurückgleiten dieses Gliedes bzw. des Kettenstranges 9 in den Bereich der Durchziehöffnung 17 sicher verhindert.

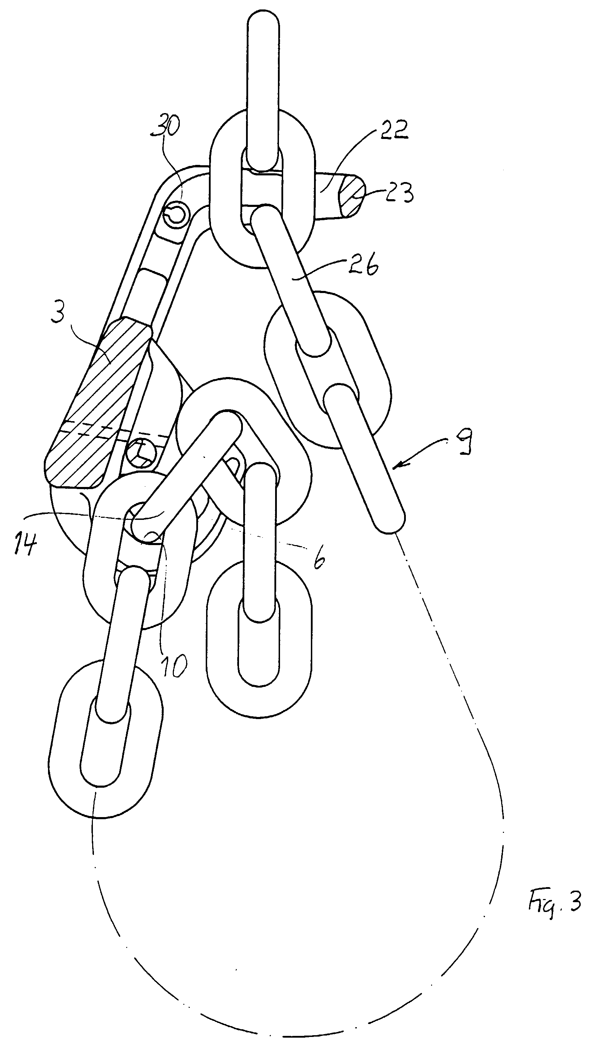

Wie die Figuren 1 und 2 erkennen lassen, ist der Abstand zwischen dem Boden 10 der Tasche 6 und dem Scheitel der Rastmulde 25 etwas größer als die Summe aus der dreifachen Teilung und der doppelten Nenndikke der Glieder des Kettenstranges 9. Durch die beschriebene Größenabstimmung wird erreicht, daß die Verkürzungsklaue nur dann belastet wird, wenn man den Kettenstrang 9 verkürzt oder aber ihn zur Bildung einer Kranzkette nutzt, wie dies in Fig. 3 dargestellt ist, in der sich das in die Tasche 6 eingehängte Kettenglied 14 auf dem Boden 10 der Tasche 6 und das Kettenglied 26 an den Seitenwänden 21 und 22 des Schlitzes 19 abstützen.

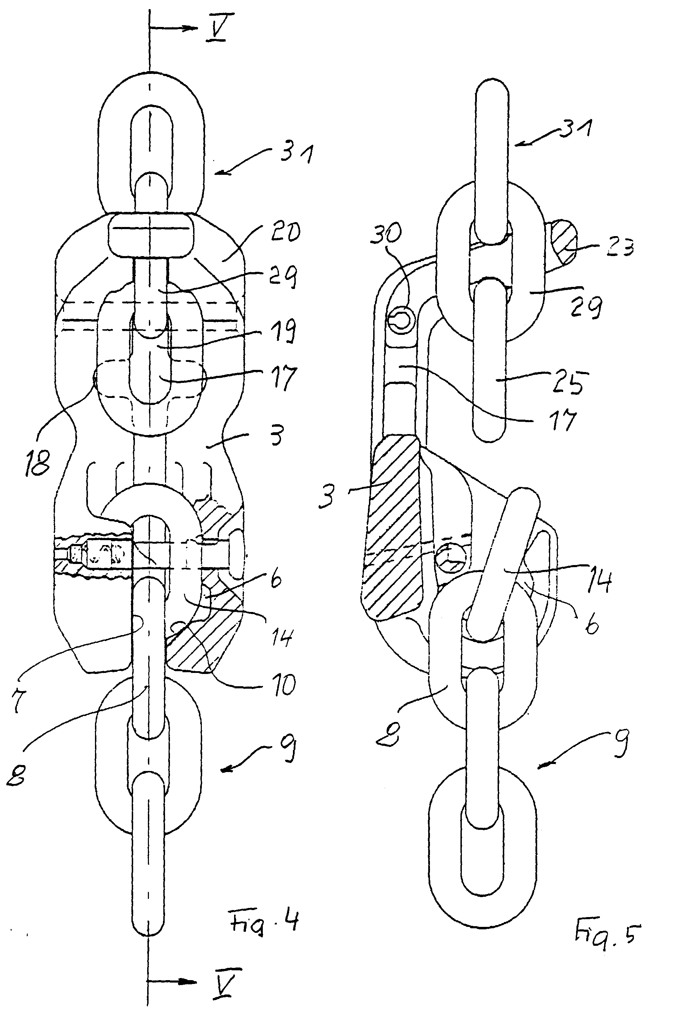

Die Fig. 4 und 5 schließlich zeigen den Einsatz der beschriebenen Verkürzungsklaue zum Verbinden des Kettenstranges 9 mit einem Kettenstrang 31, wobei der Kettenstrang 9 dem jeweiligen Bedarf entsprechend verkürzt werden kann.

## Patentansprüche

1. Doppelzinkige Verkürzungsklaue mit zwei über einen Rücken (3) miteinander in Verbindung stehenden, im wesentlichen parallel zueinander angeordneten Haken, die im Bereich ihrer einen Einführschlitz (7) für ein Glied (8) eines Kettenstranges (9) begrenzenden Zinken (1,2) eine Seitenwände (4,5) aufweisende Tasche (6) zur Aufnahme und Abstützung eines auf das in den Einführschlitz (7) eingeführte Kettenglied folgenden Kettengliedes bilden, das im wesentlichen senkrecht zur Ebene des Einführschlitzes (7) angeordnet und durch ein einen Anschlag für den Bug des in den Einführschlitz (7) eingeführten Kettengliedes (8)bildendes Sicherungselement gegen unerwünschtes Aushängen aus der Tasche (6) gesichert ist, **dadurch gekennzeichnet**, daß oberhalb der Tasche (6) im Klauenrücken (3) eine Durchziehöffnung (17) für den das in die Tasche (6) eingehängte Kettenglied (14) aufweisenden Kettenstrang (9) oder einen mit diesem Kettenstrang (9) verbindbaren weiteren Kettenstrang (31) angeordnet ist und daß in die Durchziehöffnung (17) ein Schlitz (19) mündet, der eine mit der Mittenebene des Einführschlitzes (7) gemeinsame Mittenebene aufweist und bis in ein der Tasche (6) abgewandtes, abgewinkeltes Ende (20) des Klauenrückens (3) reicht, wobei die am der Durchziehöffnung (17) abgewandten Schlitzende durch ein Querjoch (23) miteinander verbundenen Seitenwände (21,22) dieses Schlitzes (19) zur Abstützung des Buges eines Kettengliedes (26) des das in die Tasche (6) eingehängte Kettenglied (14) aufweisenden Kettenstranges (9) oder des mit diesem Kettenstrang (9) verbindbaren weiteren Kettenstranges (31) nutzbar sind.

2. Verkürzungsklaue nach Anspruch 1, **dadurch gekennzeichnet**, daß ein in den in die Durchziehöffnung (17) mündenden Schlitz (19) eingeführtes Kettenglied (29) durch ein Sperrelement (30) gegen eine Verlagerung in den Bereich der Durchziehöffnung (17) gesichert ist.

3. Verkürzungsklaue nach Anspruch 1 oder 2, **dadurch gekennzeichnet**, daß die Durchziehöffnung (17) von zwei sich kreuzenden Schlitzen (18,19) gebildet wird.

4. Verkürzungsklaue nach einem oder mehreren der Ansprüche 1 bis 3, **dadurch gekennzeichnet**, daß das abgewinkelte Ende des Klauenrückens (3) gegenüber dessen Hauptteil einen Winkel von 90 - 120° einschließt.

5. Verkürzungsklaue nach einem oder mehreren der Ansprüche 1 bis 4, **dadurch gekennzeichnet**, daß die Seitenwände (21, 22) des in die Durchziehöffnung (17) mündenden Schlitzes (19) im abgewinkelten Bereich des Klauenrückens (3) mit mindestens einer Rastmulde (24,25) und/oder einem Rasthöcker (28) versehen sind.

6. Verkürzungsklaue nach einem oder mehreren der Ansprüche 1 bis 5, **dadurch gekennzeichnet**, daß das Sicherungselement für das auf das in die Tasche (6) eingehängte Kettenglied (14) folgende Kettenglied (8) von einem in fluchtenden Bohrungen der den Einführschlitz (7) begrenzenden Zinken (1,2) hin- und herbewegbaren Verriegelungsbolzen (12) gebildet wird, der gegen die Wirkung einer Feder (11) aus einer Sperrstellung in eine Freigabestellung überführbar ist, in der eine an ihm angebrachte Quernut (15) in den Bereich des Buges des auf das eingehängte Kettenglied (14) folgenden Kettengliedes (8) gelangt und dieses freigibt.

7. Verkürzungsklaue nach Anspruch 6, **dadurch gekennzeichnet**, daß die Quernut (15) eine Schrägfläche aufweist, die eine Betätigungsrampe (16) für den Verriegelungsbolzen (12) bildet, der unter Krafteinwirkung auf die Betätigungsrampe (16) beim Einführen eines Kettengliedes (8) in den Einführschlitz (7) durch das Kettenglied (8) aus der Sperrstellung in die Freigabestellung verschiebbar ist.

## Claims

1. A double-pronged shortening claw having two hooks which are connected to one another via a back (3), are arranged essentially parallel to one another and, in the area of their prongs (1, 2) defining an insertion slot (7) for a link (8) of a chain strand (9), form a pocket (6), having side walls (4, 5), for accommodating and supporting a chain link which follows the chain link inserted into the insertion slot (7), which is arranged essentially perpendicularly to the plane of the insertion slot (7) and, to prevent it from hanging undesirably out of the pocket (6), which is secured by a securing element forming a stop for the nose of the chain link (8) inserted into the insertion slot (7), wherein a pull-through opening (17) for the chain strand (9) having the chain link (14) put into the pocket (6) or a further chain strand (31) which can be connected to this chain strand (9) is arranged above the pocket (6) in the claw back (3), and wherein a slot (19) leads into the pull-through opening (17), which slot (19) has a center plane in common with the center plane of the insertion slot (7) and extends right into an angled end (20), remote from the pocket (6), of the claw back (3), in which arrangement the side walls (21, 22) of this slot (19), which are connected to one another by a cross yoke (23) at the slot end remote from the pull-through opening (17), can be utilized for supporting the nose of a chain link (26) of the chain strand (9) having the chain link (14) put into the pocket (6) or of the further chain strand (31) which can be connected to this chain strand (9).

2. The shortening claw as claimed in claim 1, wherein a chain link (29) inserted into the slot (19) leading into the pull-through opening (17) is secured by a locking element (30) to prevent it from being displaced into the area of the pull-through opening (17).

3. The shortening claw as claimed in claim 1 or 2, wherein the pull-through opening (17) is formed by two crossing slots (18, 19).

4. The shortening claw as claimed in one or more of claims 1 to 3, wherein the angled end of the claw back (3) encloses an angle of 90 - 120° relative to its main part.

5. The shortening claw as claimed in one or more of claims 1 to 4, wherein the side walls (21, 22) of the slot (19) leading into the pull-through opening (17) are provided with at least one catch hollow (24, 25) and/or a catch hump (28) in the angled area of the claw back (3).

6. The shortening claw as claimed in one or more of claims 1 to 5, wherein the securing element for the chain link (8) following the chain link (14) put into the pocket (6) is formed by a locking bolt (12) which can be moved in a reciprocating manner in aligned bores in the prongs (1, 2) defining the insertion slot (7) and can be shifted against the action of a spring (11) from a locking position into a release position in which a transverse groove (15) made in said bolt passes into the area of the nose of the chain link (8) following the put-in chain link (14) and releases this chain link (8).

7. The shortening claw as claimed in claim 6, wherein the transverse groove (15) has an inclined surface which forms an actuating ramp (16) for the locking bolt (12), which, under the action of force on the actuating ramp (16) upon insertion of a chain link (8) into the insertion slot (7), can be displaced by the chain link (8) out of the locking position into the release position.

## Revendications

1. Griffe de raccourcissement à deux dents, comprenant deux crochets qui sont disposés d'une manière pratiquement parallèle l'un à l'autre et sont reliés l'un à l'autre par un dos (3) et qui, dans la zone de leurs dents (1, 2) délimitant une fente (7) d'introduction d'un maillon (8) d'un longueur de chaîne (9), forment une poche (6) présentant des parois latérales (4, 5) et servant au logement et à l'appui d'un maillon qui suit le maillon introduit dans la fente d'introduction (7), qui est disposé pratiquement perpendiculairement au plan de la fente d'introduction (7) et qui est empêché de se décrocher de la poche (6) d'une manière intempestive au moyen d'un élément d'immobilisation constituant une butée pour l'arrondi du maillon (8) introduit dans la fente d'introduction (7), caractérisée en ce qu'il est prévu, disposée au-dessus de la poche (6) et dans le dos de griffe (3), une ouverture (17) de passage de la longueur de chaîne (9) comportant le maillon de chaîne (14) suspendu dans la poche (6) ou d'une autre longueur de chaîne (31) pouvant être reliée à cette longueur de chaîne (9) et en ce qu'il est prévu, débouchant dans l'ouverture de passage (17), une fente (19) qui présente un plan médian commun au plan médian de la fente d'introduction (7) et s'étend jusqu'à une extrémité coudée angulairement (20) du dos de griffe (3) qui est située du côté opposé à la poche (6), tandis que les parois latérales (21, 22) de cette fente (19), reliées entre elles par un pont transversal (23) à l'extrémité de la fente qui est située à l'opposé de l'ouverture de passage (17), sont utilisables pour servir d'appui à l'arrondi d'un maillon de chaîne (26) de la longueur de chaîne (9) comportant le maillon (14) suspendu dans la poche (6) ou de l'autre longueur de chaîne (31) pouvant être reliée à cette longueur de chaîne (9).

2. Griffe de raccourcissement selon la revendication 1, caractérisée en ce qu'un maillon de chaîne (29) introduit dans la fente (19) débouchant dans l'ouverture de passage (17) est empêché, au moyen d'un élément d'arrêt (30), de se déplacer dans la zone de l'ouverture de passage (17).

3. Griffe de raccourcissement selon la revendication 1 ou 2, caractérisée en ce que l'ouverture de passage (17) est formée de deux fentes (18, 19) se croisant.

4. Griffe de raccourcissement selon une ou plusieurs des revendications 1 à 3, caractérisée en ce que l'extrémité coudée du dos de griffe (3) fait avec la partie principale de ce dernier un angle de 90 à 120°.

5. Griffe de raccourcissement selon une ou plusieurs des revendications 1 à 4, caractérisée en ce que les parois latérales (21, 22) de la fente (19) débouchant dans l'ouverture de passage (17) sont pourvues, dans la zone coudée du dos de griffe (3), d'au moins un alvéole d'enclenchement (24, 25) et/ou d'un bossage d'enclenchement (28).

6. Griffe de raccourcissement selon une ou plusieurs des revendications 1 à 5, caractérisée en ce que l'élément d'immobilisation du maillon de chaîne (8) qui suit le maillon (14) suspendu dans la poche (6) est constitué d'une tige de verrouillage (12) qui peut se déplacer dans un sens et dans l'autre dans des trous alignés des dents (1, 2) délimitant la fente d'introduction (7) et qui peut passer, à l'encontre de l'action d'un ressort (11), d'une position d'arrêt à une position de libération dans laquelle une rainure transversale (15) ménagée dans cette tige de verrouillage parvient dans la zone de l'arrondi du maillon (8) suivant le maillon (14) suspendu et libère ce maillon suivant (8).

7. Griffe de raccourcissement selon la revendication 6, caractérisée en ce que la rainure transversale (15) comporte une surface inclinée qui constitue une rampe (16) d'actionnement de la tige de verrouillage (12), laquelle, lorsqu'une force est exercée sur la rampe d'actionnement (16) lors de l'introduction d'un maillon (8) dans la fente d'introduction (7), peut être déplacée de la position d'arrêt à la position de libération par le maillon (8).
